# DEMANDE DE BREVET EUROPEEN

(11) **EP 4 729 359 A1**
(43) Date de publication de la demande: **22.04.2026**
(21) Numéro de dépôt: 25208711.9
(22) Date de dépôt: 14.10.2025
(51) Int. Cl.: B60P 3/12, B60D 1/155

(54) **PROCÉDÉ ET SYSTÈME DE MESURE D'UNE CHARGE VERTICALE SUR UN VÉHICULE REMORQUEUR**

(30) Priorité: 16.10.2024 FR 2411225
(71) Demandeur: Soframe Société Française de Matériel, 67980 Hangenbieten (FR)
(72) Inventeur: BLEIN, Guillaume, 67120 MOLSHEIM (FR); SCHERER, Romain, 57480 WALDWISSE (FR)
(74) Mandataire: Ipsilon

(57) **Abrégé**

L'invention concerne un procédé d'aide au remorquage pour déterminer des paramètres de remorquage comprenant une charge verticale appliquée sur un véhicule remorqueur (1) comportant un châssis (1), au moins un essieu arrière (3), au moins un essieu avant (4, 5) et un bras de remorquage (6) articulé sur le châssis (2), comprenant :
- a) mesurer à l'aide d'au moins un capteur de pression, la pression de fluide dans au moins une grande chambre d'au moins un vérin de levage (9) et/ou d'un vérin de correction d'assiette (11) du bras de remorquage (6), lequel comporte une masse suspendue au niveau d'un porte-outil (10) lors d'une opération de remorquage,
- b) déterminer la distance entre le porte-outil (10) et un axe de pivotement (6a) du bras de remorquage (6), et
- c) déterminer la valeur de l'effort vertical appliqué au porte-outil (10) à partir des valeurs mesurées et de coefficients correcteurs.

## Description

### Domaine technique

La présente invention se rapporte au domaine technique général du dépannage de véhicules et plus particulièrement du dépannage de véhicules lourds dans des conditions environnementales difficiles. Ces conditions environnementales difficiles sont souvent rencontrées lors de dépannages de véhicules militaires.

L'invention concerne notamment des véhicules de dépannage qui font face à des problématiques de sécurité importantes, lesquelles imposent une intervention de dépannage la plus rapide possible, tout en garantissant l'intégrité du matériel de dépannage et la sécurité des personnes intervenant lors du dépannage. En outre, ces dépannages peuvent être nécessaires sur des terrains difficiles, face à des attaques ennemies, des tirs ou d'autres menaces de tout genre.

Par ailleurs, l'invention concerne des véhicules de dépannage dont les châssis sont équipés en général de suspensions mécaniques à lames, afin de monter plus haut en charge admissible sur les essieux

### Technique antérieure

Dans un tel contexte difficile, il est connu qu'un opérateur du véhicule de dépannage travaille avec un abaque de charge qui prend en compte la configuration du véhicule de dépannage pour lui donner notamment la charge maximale qu'il est possible de lever avec un bras de remorquage de son véhicule de dépannage, appelé aussi véhicule remorqueur ou véhicule de remorquage dans la suite. Ainsi, suivant les caractéristiques du véhicule à dépanner, l'opérateur grâce à l'utilisation de l'abaque sait s'il peut réaliser le dépannage en garantissant l'intégrité du matériel de dépannage.

La lecture d'un tel abaque est cependant complexe, car l'opérateur doit tenir compte d'une multitude de facteurs et ce en étant soumis à un environnement de stress intense.

Le document US 2023/384144 A1 décrit un système d'aide au remorquage et un procédé pour équiper un système de remorquage avec un tel système d'aide au remorquage, ainsi qu'un procédé d'utilisation d'un véhicule de remorquage comportant un tel système d'aide au remorquage.

On connait, par exemple par l'intermédiaire du document US 11 820 372 B2, un système d'aide au remorquage pour un véhicule de remorquage comprenant un bras de remorquage s'étendant vers l'arrière dudit véhicule de remorquage et adapté pour soulever au moins une partie du véhicule à dépanner. Le système d'aide au remorquage comprend des capteurs de force montés sur le long du véhicule qui indiquent une charge appliquée, par exemple sur les différents essieux, via le bras de remorquage sous lequel est suspendue une partie du véhicule à dépanner. Le système d'aide au remorquage comprend aussi un contrôleur qui traite les signaux issus des capteurs pour calculer la charge utile résultant du levage de la partie du véhicule dépanné ainsi que les limites de fonctionnement du véhicule de remorquage. Une telle solution technique n'est pas dépourvue d'inconvénients.

En effet, les conditions environnementales extrêmes peuvent affecter la fiabilité de mesure des capteurs utilisés et le calcul des limites de fonctionnement, notamment la charge maximale à l'essieu. Un tel calcul est complexe, dans la mesure où ledit calcul dépend directement des paramètres structurels des essieux, de la suspension et du châssis du véhicule de remorquage.

A ce jour, aucune solution technique fiable n'est connue pour mesurer une charge à l'essieu sur un essieu à suspension mécanique à lames et a fortiori dans des conditions environnementales difficiles. On peut citer par exemple des températures extrêmes auxquelles peuvent être exposés les véhicules de dépannage, des conditions d'utilisation extrêmes, comme par exemple la réalisation d'un passage à gué en immergeant totalement la chaîne de transmission desdits véhicules, qui compliquent substantiellement l'opération de dépannage.

Il existe donc une problématique récurrente liée au risque de rupture du châssis de véhicules de dépannage lors de la phase dépannage appelée « tractélevé ».

### Présentation de l'invention

L'objet de l'invention vise par conséquent à pallier les inconvénients de l'art antérieur en proposant un nouveau procédé d'aide au remorquage fiable, permettant de fournir rapidement à l'opérateur des informations fiables se rapportant à la charge verticale appliquée notamment aux essieux du véhicule de remorquage afin de l'informer en continu que les limites de fonctionnement du système de dépannage ne sont pas atteintes.

Un autre objet de l'invention vise proposer un nouveau procédé d'aide au remorquage, dont la mise en œuvre est compatible avec tous types de châssis et d'essieux d'un véhicule de remorquage.

Un autre objet de l'invention vise à fournir un système d'aide au remorquage facilitant le travail de l'opérateur et notamment de l'exécution des opérations de dépannage.

Un autre objet de l'invention vise à fournir un véhicule de remorquage équipé d'un système d'aide au remorquage fiable et simple d'utilisation.

Les objets assignés à l'invention sont atteints à l'aide d'un procédé d'aide au remorquage pour déterminer des paramètres de remorquage comprenant une charge verticale appliquée sur un véhicule remorqueur comportant un châssis, au moins un essieu arrière, au moins un essieu avant à suspension mécanique et un bras de remorquage articulé sur le châssis l'aide d'un axe de pivotement, ledit bras de remorquage comportant un bras télescopique, ledit procédé comprenant les étapes :
- a) mesurer à l'aide d'au moins un capteur de pression, la pression de fluide hydraulique dans au moins une chambre d'au moins un vérin de levage et/ou un vérin de correction d'assiette du bras de remorquage, lequel comporte une masse suspendue au niveau d'un porte-outil lors d'une opération de remorquage,
- b) déterminer la distance entre le porte-outil et l'axe de pivotement du bras de remorquage à partir d'une mesure de l'extension du bras télescopique,
- c) déterminer la valeur de l'effort vertical appliqué au porte-outil, et par conséquent au bras de remorquage, à partir des valeurs mesurées lors de l'étape a) et lors de l'étape b) et de coefficients correcteurs préenregistrés.

Selon un exemple de mise en œuvre, le procédé comprend une étape d) selon laquelle on affiche l'effort vertical appliqué au porte-outil déterminé sous c).

Selon un exemple de mise en œuvre, l'étape d) consiste également à afficher une valeur limite d'effort vertical applicable au porte-outil.

Selon un exemple de mise en œuvre, le procédé comprend une étape d'une part de comparaison entre la valeur de l'effort vertical appliqué au porte-outil et une valeur limite correspondante pour vérifier si l'effort vertical appliqué au porte-outil est compatible avec l'opération de remorquage et d'autre part d'affichage du résultat de cette comparaison.

Selon un exemple de mise en œuvre, le procédé comprend une étape e) selon laquelle on combine les valeurs déterminées sous c) avec le bilan de masse du véhicule remorqueur pour estimer la charge à l'essieu arrière et la charge à l'essieu avant lors de l'opération de remorquage.

Selon un exemple de mise en œuvre, le procédé comprend une étape une étape f), selon laquelle on affiche les charges aux essieux.

Selon un exemple de mise en œuvre, le procédé comprend une étape une étape f), consiste également à afficher des limites de charges applicables aux essieux.

Selon un exemple de mise en œuvre, le procédé comprend une étape d'une part de comparaison entre les valeurs de charges aux essieux et des valeurs limites correspondantes, pour vérifier si les valeurs de charge aux essieux sont compatibles avec l'opération de remorquage, et d'autre part d'affichage du résultat de cette comparaison.

Selon un exemple de mise en œuvre, le procédé consiste à mesurer une pression de fluide hydraulique dans une grande chambre d'au moins un vérin de levage et/ou au moins un vérin de correction d'assiette du bras de remorquage.

Selon un exemple de mise en œuvre, le procédé consiste à mesurer une pression de fluide hydraulique dans une petite chambre d'au moins un vérin de levage et/ou au moins un vérin de correction d'assiette du bras de remorquage.

Selon un exemple de mise en œuvre, à l'étape b) on détermine la distance entre le porte-outil et l'axe de pivotement du bras de remorquage en utilisant également une mesure de l'assiette du bras télescopique du bras de remorquage.

Les objets assigné à l'invention sont atteints également à l'aide d'un système d'aide au remorquage pour mettre en œuvre le procédé présenté ci-dessus, ledit système équipant un véhicule remorqueur comportant un châssis, au moins un essieu arrière et au moins un essieu avant, à suspension mécanique, un bras de remorquage comportant un bras télescopique dont une extrémité est équipée d'un porte-outil et dont une autre extrémité est articulée sur le châssis via un axe de pivotement transversal au châssis, caractérisé en ce qu'il comprend :
- au moins un capteur de pression monté sur une chambre d'au moins un vérin de levage et/ou d'au moins un vérin de correction d'assiette du bras de remorquage,
- un dispositif de mesure pour mesurer ou déterminer la distance entre le porte-outil et l'axe de pivotement, et
- un calculateur ou automate comportant des valeurs théoriques préenregistrées comprenant des coefficients correcteurs pour déterminer avec les valeurs mesurées, la valeur estimée de l'effort vertical appliqué au porte-outil.

Les valeurs théoriques préenregistrées comprennent par exemple également le bilan de masse du véhicule remorqueur, de manière à fournir une estimation de la charge appliquée à l'essieu arrière et une estimation de la charge appliquée à l'essieu avant.

Selon un exemple de réalisation le système d'aide au remorquage comprend un dispositif d'affichage du genre écran, associé au calculateur ou automate pour afficher au moins la valeur estimée de l'effort vertical au porte-outil.

Selon un exemple de réalisation du système d'aide au remorquage, le dispositif d'affichage est conçu pour afficher simultanément la valeur estimée de l'effort vertical au porte-outil et une valeur limite correspondante.

Selon un exemple de réalisation du système d'aide au remorquage, le dispositif d'affichage est conçu pour afficher la valeur estimée des charges appliquées aux essieux et des valeurs limites correspondantes.

Selon un exemple de réalisation, le système d'aide au remorquage comprend au moins un capteur de pression monté sur la grande chambre d'au moins un vérin de levage et/ou d'au moins un vérin de correction d'assiette du bras de remorquage.

Selon un exemple de réalisation, le système d'aide au remorquage comprend au moins un capteur de pression complémentaire monté sur la petite chambre d'au moins un vérin de levage et/ou d'au moins un vérin de correction d'assiette du bras de remorquage.

Selon un exemple de réalisation, le système d'aide au remorquage comprend un indicateur visuel pour fournir une information visuelle image du niveau de charge verticale appliquée au bras de remorquage en indiquant si les paramètres de remorquage sont situés dans une plage de fonctionnement permettant d'effectuer le remorquage en sécurité. L'indicateur visuel est par exemple une colonne lumineuse montée sur le véhicule remorqueur.

Selon un exemple de réalisation, le système d'aide au remorquage comprend un indicateur sonore fournissant un signal sonore lorsque la charge verticale maximale admissible pour le bras de remorquage est atteinte.

Selon un exemple de réalisation du système d'aide au remorquage, le dispositif de mesure comprend un codeur à câble pour mesurer l'extension dudit bras télescopique de manière à déterminer la distance entre ledit porte-outil et l'axe de pivotement du bras de remorquage. Le codeur à câble est par exemple monté dans le bras télescopique.

Selon un exemple de réalisation du système d'aide au remorquage, le vérin de correction d'assiette, articulé sur la partie coudée via une première articulation et sur le bras télescopique via une deuxième articulation, est équipé d'un dispositif de mesure pour mesurer la distance entre sa première articulation et sa deuxième articulation, pour fournir une information sur l'assiette du bras télescopique.

Les objets assignés à l'invention sont atteints également à l'aide d'un véhicule remorqueur comportant un châssis comportant au moins un essieu arrière et au moins un essieu avant, à suspension mécanique, un bras de remorquage présentant une partie coudée dont une extrémité est articulée sur le châssis via un axe de pivotement transversal au châssis et dont une autre extrémité se prolonge par un bras télescopique articulé, sur lequel est monté un porte-outil, des organes de commande hydrauliques du bras de remorquage comprenant un vérin de levage articulé sur la partie coudée et sur le châssis, un vérin de correction d'assiette articulé sur la partie coudée et sur le bras télescopique, un vérin d'extension monté dans ledit bras télescopique et un circuit hydraulique pour alimenter en fluide hydraulique lesdits organes de commande, ledit véhicule comportant un système d'aide au remorquage tel que présenté ci-dessus.

Le procédé d'aide au dépannage conforme à l'invention présente l'énorme avantage de simplifier au maximum les opérations de dépannage en garantissant à l'opérateur que les limites de fonctionnement dudit systèmes ne sont pas atteintes et qu'il va pouvoir s'extraire le plus rapidement possible d'une zone sensible sans dégrader son véhicule. Il évite ainsi panne potentielle liée à une mauvaise lecture ou mauvaise interprétation d'un paramètre de fonctionnement du véhicule de remorquage lors de l'opération de remorquage.

Un avantage du système d'aide au remorquage conforme à l'invention réside dans le fait que l'on s'affranchit de toutes les problématiques liées au châssis du véhicule de remorquage. En effet, le système d'aide au remorquage conforme à l'invention s'intègre au bras de remorquage commun à presque tous les véhicules de remorquage et il est indépendant du châssis. Ainsi, il est possible de modifier les essieux et les équipements d'un véhicule de remorquage sans remettre en cause le procédé d'aide au remorquage. Il suffit alors de modifier le bilan de masse du véhicule de remorquage, c'est-à-dire modifier en conséquence les paramètres préenregistrés correspondants aux paramètres principaux de l'architecture du véhicule remorqueur afin qu'ils soient représentatifs de l'architecture particulière du véhicule considéré. Mais l'architecture et la réalisation structurelle du système d'aide au remorquage ne seront pas impactées. Les coûts de développement et d'adaptation du système d'aide au remorquage pourront ainsi être diminués.

Le système d'aide au remorquage conforme à l'invention peut ainsi être adapté de manière simple à tous véhicule de remorquage neuf ou existant en tant qu'option de seconde monte.

Le système d'aide au remorquage conforme à l'invention permet de s'affranchir de jauges de contraintes ou capteurs d'efforts, disposés sur le châssis, notamment au niveau de chaque essieu. Une telle construction serait techniquement compliquée et ne permettrait pas d'obtenir une fiabilité de fonctionnement satisfaisante avec des suspensions mécaniques.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
[Fig 1] est une vue de profil d'un exemple de réalisation d'un véhicule remorqueur équipé d'un système d'aide au remorquage conforme à l'invention,
[Fig 2] est une illustration d'une partie arrière du véhicule remorqueur de la figure 1 montrant un bras de remorquage dans diverses positions et avec un bras télescopique déployée,
[Fig 3] est une vue arrière et en perspective du véhicule remorqueur de la figure 1,
[Fig 4] est une illustration agrandie et en coupe de la partie arrière du véhicule remorqueur de la figure 1 avec le bras télescopique dans une position déployée et rétractée,
[Fig 5] est un agrandissement de la figure 2 montrant le bras de remorquage dans une position basse,
[Fig 6] est un agrandissement de la figure 2 montrant le bras de remorquage dans une position intermédiaire,
[Fig 7] est un agrandissement de la figure 2 montrant le bras de remorquage dans une position haute,
[Fig 8] est une vue montrant le bras de remorquage du véhicule remorqueur de la figure 1 dans une position intermédiaire et avec le bras télescopique en extension maximale, et
[Fig 9] est un agrandissement de la figure 2 montrant le bras de remorquage avec le bras télescopique dans une position repliée vers le haut.

### Description des modes de réalisation

Les éléments structurellement et fonctionnellement identiques ou similaires, présents sur plusieurs figures distinctes, sont affectés d'une même référence numérique ou alphanumérique.

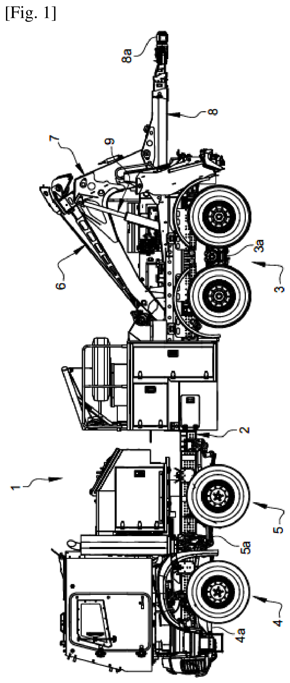

La figure 1 est une vue de profil d'un exemple de réalisation d'un véhicule remorqueur 1 équipé d'un système d'aide au remorquage conforme à l'invention. Le véhicule remorqueur 1 comporte notamment un châssis 2 équipé d'un essieu arrière 3 double et de deux essieux avant 4 et 5. Chacun des essieux 3, 4 et 5 est équipé d'une suspension mécanique 3a, 4a et 5a correspondante. Les suspensions mécaniques 3a, 4a et 5a sont par exemple des suspensions mécaniques à lames.

Selon un autre exemple de réalisation, non illustré aux figures, l'essieu arrière 3 double, peut être remplacé par deux essieux arrière à suspensions indépendantes.

Selon un autre exemple de réalisation, non illustré aux figures, le véhicule remorqueur 1 comporte un unique essieu avant et un unique essieu arrière.

Selon un autre exemple de réalisation, non illustré aux figures, le véhicule remorqueur 1 comporte un groupe d'essieux avant et un groupe d'essieux arrière.

Le véhicule remorqueur 1 comporte un bras de remorquage 6 monté sur la partie arrière du châssis 2.

Le bras de remorquage 6 présente une partie coudée 7 dont une extrémité est articulée sur le châssis 2 via un axe de pivotement transversal au châssis 2 et dont une autre extrémité se prolonge par un bras télescopique 8. Un porte-outil, non représenté, est monté avantageusement sur l'extrémité libre 8a du bras télescopique 8.

Le véhicule remorqueur 1 comporte des organes de commande hydrauliques et un circuit hydraulique pour piloter les pivotements du bras de remorquage 6, la correction d'assiette du bras télescopique 8 articulé sur la partie coudée 7 et l'extension et la rétraction dudit bras télescopique 8.

Les organes de commande comprennent un vérin de levage 9 articulé sur la partie coudée 7 et sur le châssis 2.

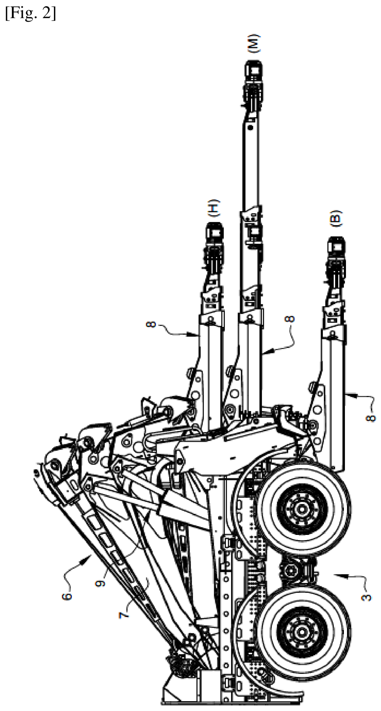

La figure 2 est une illustration d'une partie arrière du véhicule remorqueur 1, montrant le bras de remorquage 6 dans diverses positions et avec un bras télescopique 8 déployée,

La partie coudée 7 est ainsi illustrée dans diverses positions de pivotement correspondant respectivement à une position basse B, intermédiaire M et haute H. La position intermédiaire M illustre le bras télescopique 8 en extension maximale et les positions basse B et haute H, illustrent le bras télescopique 8 en rétraction maximale.

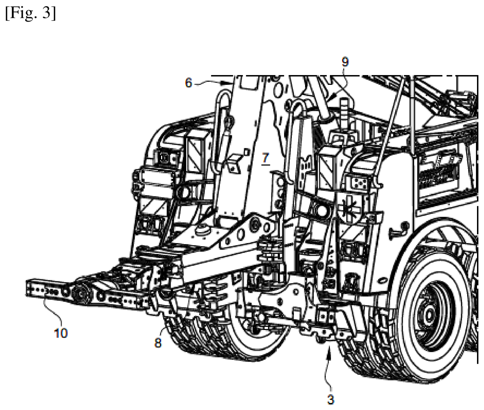

La figure 3 est une vue arrière et en perspective d'un exemple de réalisation du véhicule remorqueur 1. Le bras télescopique 8 est équipé d'un porte-outil 10 pour l'accrochage d'un véhicule à remorquer.

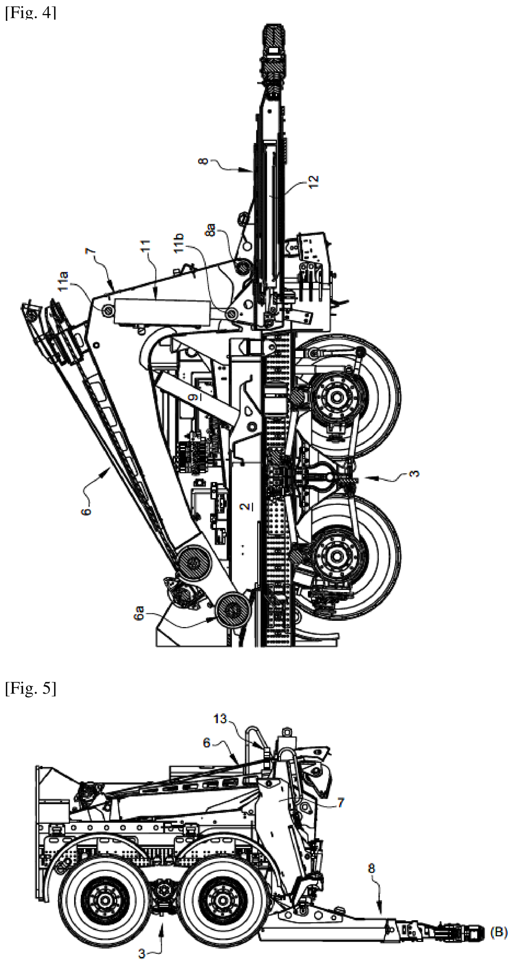

La figure 4 est une illustration agrandie et en coupe de la partie arrière du véhicule remorqueur 1 avec le bras télescopique 8 dans une position intermédiaire déployée et rétractée.

Les organes de commande comprennent un vérin de correction d'assiette 11 articulé via une première articulation 11a sur la partie coudée 7 et via une deuxième articulation 11b sur le bras télescopique 8. Il est nécessaire de corriger l'assiette du bras télescopique 8 lorsque le bras de remorquage 6 pivote autour d'un axe de pivotement 6a pour conserver une extension sensiblement horizontale. L'axe de pivotement 6a est monté, selon une direction transversale au véhicule remorqueur 1, sur ou dans le châssis 2.

Lors d'une opération de remorquage, il est nécessaire, afin de rester dans des plages de fonctionnement optimales pour le véhicule remorqueur 1, de maintenir le bras télescopique 8 dans une position présentant une assiette sensiblement horizontale. La mesure d'un paramètre image d'une telle assiette peut donc s'avérer très utile.

Ainsi, selon un exemple de réalisation, le vérin de correction d'assiette 11 est équipé d'un dispositif de mesure pour mesurer la distance entre sa première articulation 11a et sa deuxième articulation 11b. Cette distance entre les articulations 11a et 11b permet alors de déterminer l'assiette du bras télescopique 8.

Le vérin de correction d'assiette 11 permet également de déplacer le bras télescopique 8 autour d'une articulation 8a, entre une position déployée telle que représentée et une position repliée vers le haut, appelée position de roulage. Cette position repliée vers le haut du bras télescopique 8 correspond à une extension maximale du vérin de correction d'assiette 11.

Les organes de commande comprennent un vérin d'extension 12 monté dans le bras télescopique 8. Le vérin d'extension 12 permet ainsi de modifier la longueur du bras télescopique 8 et par conséquent de modifier la distance entre l'axe de pivotement 6a du bras de remorquage 6 et l'extrémité libre du bras télescopique 8 correspondant à la position du porte-outil 10.

La valeur de l'extension du bras télescopique 8 permet de déterminer de façon indirecte la distance entre le porte-outil 10 et l'axe de pivotement 6a. La valeur calculée de l'assiette du bras télescopique 8, obtenue via une mesure de l'extension du vérin de correction d'assiette 11, permet alors d'affiner la détermination de la distance entre le porte-outil 10 et l'axe de pivotement 6a.

La figure 5 est un agrandissement de la figure 2 montrant le bras de remorquage 6 dans une position basse B, dans laquelle le bras télescopique 8 est déployé et rétracté.

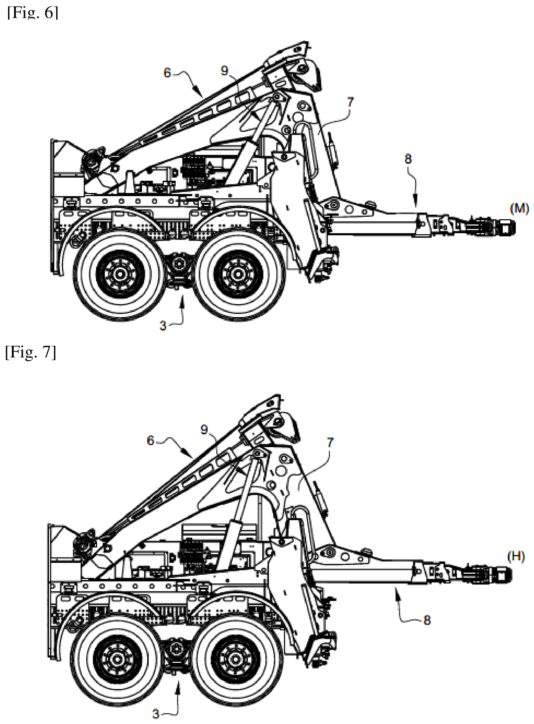

La figure 6 est un agrandissement de la figure 2 montrant le bras de remorquage 6 dans une position intermédiaire M, dans laquelle le bras télescopique 8 est déployé et rétracté.

La figure 7 est un agrandissement de la figure 2 montrant le bras de remorquage 6 dans une position haute H, dans laquelle le bras télescopique 8 est déployé et rétracté.

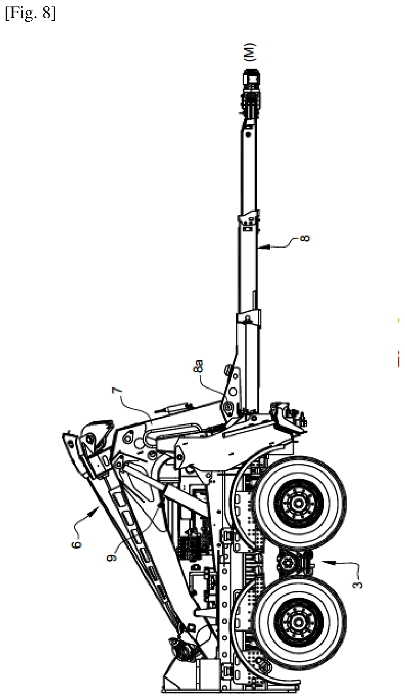

La figure 8 est une vue montrant le bras de remorquage 6 du véhicule remorqueur 1 dans une position intermédiaire M, dans laquelle le bras télescopique 8 est déployé et en extension maximale.

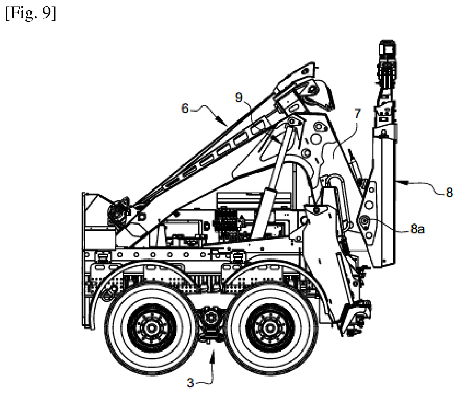

La figure 9 est un agrandissement de la figure 2 montrant le bras de remorquage 6 avec le bras télescopique 8 dans une position rétractée et repliée vers le haut. Cette position repliée du bras télescopique 8 est utilisée par exemple pour les déplacements du véhicule de remorqueur 1, hors opération de remorquage.

Le véhicule remorqueur 1 comporte un système d'aide au remorquage permettre à l'opérateur de disposer de façon simple et rapide d'informations sur des paramètres de remorquage et notamment si le remorquage peut être effectué en garantissant l'intégrité du véhicule remorqueur 1.

Le système d'aide au remorquage comprend au moins un dispositif de mesure d'effort, du genre capteur de pression, jauge de contrainte ou chaîne d'acquisition d'effort, monté sur une chambre du vérin de levage 9 ou du vérin de correction d'assiette 11.

Selon un exemple de réalisation décrit plus en détails ci-après, le dispositif de mesure d'effort comprend un capteur de pression. Selon un exemple de réalisation, le capteur de pression est monté sur la grande chambre du vérin de levage 9 ou du vérin de correction d'assiette 11, lorsque ledit vérin 9 ou 11 travaille en compression.

Selon un autre mode de réalisation, le système d'aide au remorquage comprend au moins un capteur de pression complémentaire monté sur la petite chambre du vérin de levage 9 ou du vérin de correction d'assiette 11. Un tel capteur de pression complémentaire permet alors de tenir compte de contre-pressions apparaissant dans la petite chambre du vérin de levage 9 ou du vérin de correction d'assiette 11.

Selon un autre exemple de réalisation, le dispositif de mesure d'effort comprend un capteur de pression monté uniquement sur la petite chambre du vérin de levage 9 ou du vérin de correction d'assiette 11, lorsque ledit vérin 9 ou 11 travaille en extension.

Le système d'aide au remorquage comprend un dispositif de mesure pour mesurer la distance entre le porte-outil 10 et l'axe de pivotement 6a du bras de remorquage 6.

Le dispositif de mesure comprend de préférence un codeur à câble associé au bras télescopique 8 pour mesurer l'extension dudit bras télescopique 8 de manière à déterminer la distance entre ledit porte-outil 10 et l'axe de pivotement 6a. Le codeur à câble est avantageusement monté dans le bras télescopique 8.

Selon un autre exemple de réalisation, le dispositif de mesure comprend un capteur de position de la tige du vérin d'extension 12.

Selon un autre exemple de réalisation, le codeur à câble peut être associé à un inclinomètre.

Le système d'aide au remorquage comprend un calculateur ou automate comprenant des coefficients correcteurs et le bilan de masse du véhicule remorqueur 1, notamment un bilan de masse du véhicule remorqueur 1 en ordre de marche, c'est-à-dire tous pleins faits, avec le personnel et en position de levage à des fins de remorquage.

Le bilan de masse comprend les paramètres principaux de l'architecture du véhicule remorqueur 1 en ordre de marche. Ils sont déterminés par conception dudit véhicule et donc connus. Ces paramètres principaux comprennent la masse du véhicule remorqueur 1, la position des essieux 3, 4, 5 et du porte-outil 10 par rapport au centre de gravite CDG du véhicule remorqueur 1.

Les coefficients correcteurs sont déterminés à l'aide de mesures de la masse à chaque essieu 3, 4, 5, effectuées avec des masses étalons suspendues au porte-outil 10 dans différentes positions de hauteur et d'extension. Ces coefficients correcteurs permettent de compenser une erreur pouvant provenir d'éventuelles dérives de mesures liées à la configuration du circuit hydraulique du véhicule remorqueur 1 et/ou de la configuration du châssis 2 et/ou de la configuration du bras de remorquage 6.

Afin de permettre l'opération de remorquage, le véhicule remorqueur 1 doit de préférence se trouver dans une situation particulière. Ainsi, pour le véhicule remorqueur 1, différentes hypothèses ont été considérées, à savoir, un véhicule sensiblement horizontal, un bras télescopique 8 avec une assiette particulière, à savoir sensiblement horizontale et se trouvant dans une plage de hauteurs limitée de sorte que le décalage longitudinal du porte-outil 10, lié à la rotation autour de l'axe 6a, est négligeable.

Dans le cadre d'une situation propice au remorquage, grâce aux valeurs mesurées de pression hydraulique et d'extension du bras télescopique 8 et aux coefficients correcteurs, le calculateur ou l'automate peut calculer une estimation de la masse suspendue au porte outil 10.

Grâce à ces mêmes valeurs et au bilan de masse du véhicule remorqueur 1, le calculateur ou l'automate peut calculer une estimation de la masse supportée par chaque essieu 3, 4, 5.

Le calcul pour la répartition de la masse entre les essieux peut avantageusement tenir compte d'une raideur de suspension différente d'un essieu à l'autre du véhicule remorqueur 1.

Le système d'aide au remorquage comprend avantageusement un écran associé au calculateur ou à automate pour afficher divers paramètres liés au véhicule remorqueur 1, aux limites de fonctionnement lors d'une opération de remorquage.

L'écran permet par exemple d'afficher au moins la valeur estimée de la masse suspendue au porte-outil 10. Selon un exemple de réalisation, l'écran est conçu pour afficher simultanément la valeur estimée de masse au porte-outil 10 et une valeur limite correspondante.

Selon un exemple de réalisation, l'écran est conçu pour afficher la valeur estimée de charges appliquées aux essieux 3, 4, 5 et des valeurs limites correspondantes.

Selon un exemple de réalisation, le système d'aide au remorquage comprend un indicateur visuel pour fournir une information visuelle image du niveau de charge verticale appliquée au bras de remorquage 6 en indiquant si les paramètres de remorquage sont situés dans une plage de fonctionnement permettant d'effectuer le remorquage en sécurité.

L'indicateur visuel est par exemple une colonne lumineuse 13 montée sur le véhicule remorqueur 1. La colonne lumineuse 13 fournit par exemple un signal lumineux vert lorsque tous les paramètres de fonctionnement se situent dans des plages de fonctionnement garantissant l'intégrité du véhicule remorqueur 1 et de ses diverses parties constitutives.

La colonne lumineuse 13 fournit par exemple un signal lumineux orange lorsqu'un ou plusieurs paramètres de fonctionnement s'approchent de valeurs limites préétablies, mais permettant tout de même d'effectuer le remorquage.

La colonne lumineuse 13 fournit par exemple un signal lumineux rouge lorsqu'un ou plusieurs paramètres de fonctionnement dépassent une valeur limite préétablie. Un tel signal lumineux indique à l'opérateur que l'intégrité du véhicule remorqueur 1 n'est plus garantie si l'opération de remorquage est effectuée. Dans des circonstances sans danger avéré, l'opérateur peut donc décider sursoir à l'opération de remorquage le temps d'effectuer des adaptations nécessaires sur le véhicule à dépanner.

Selon un exemple de réalisation, le système d'aide au remorquage comprend un indicateur sonore fournissant un signal sonore par exemple lorsque la charge verticale maximale admissible pour le bras de remorquage 6 est atteinte. Ce signal sonore peut par exemple être mis en sourdine.

Le système d'aide au remorquage est basé sur un procédé d'aide au remorquage notamment pour déterminer des paramètres de remorquage comprenant une charge verticale appliquée sur le véhicule remorqueur 1.

Le procédé d'aide au remorquage comprend une étape a) selon laquelle on mesure à l'aide d'au moins un capteur de pression, la pression de fluide hydraulique dans au moins une chambre d'au moins un vérin de levage 9 et/ou d'un vérin de correction d'assiette 11 du bras de remorquage 6 comportant une masse suspendue au niveau du porte-outil 10.

Selon une étape b), on détermine la distance entre le porte-outil 10 et l'axe de pivotement 6a du bras de remorquage 6 à partir d'une mesure de l'extension du bras télescopique 8.

Ensuite, selon une étape c), on détermine la valeur de l'effort vertical appliqué au porte-outil 10, correspondant à la masse suspendue au dit porte-outil 10, et par conséquent au bras de remorquage 6, à partir des valeurs mesurées lors de l'étape a) et lors de l'étape b) et de coefficients correcteurs préenregistrés.

Le procédé comprend une étape d) selon laquelle on affiche l'effort vertical appliqué au porte-outil 10 déterminé sous c). Selon un exemple de mise en œuvre, l'étape d) consiste à afficher également une valeur limite d'effort vertical applicable au porte-outil 10.

Selon un exemple de mise en œuvre, le procédé comprend une étape de comparaison entre la valeur de l'effort vertical appliqué au porte-outil 10 et une valeur limite correspondante pour vérifier si l'effort vertical appliqué au porte-outil 10 est compatible avec l'opération de remorquage.

Selon un exemple de mise en œuvre, le procédé comprend une étape e) selon laquelle on combine les valeurs déterminées sous c) avec le bilan de masse du véhicule remorqueur 1 pour estimer la charge à l'essieu arrière 3 et la charge à l'essieu avant 4, 5 lors de l'opération de remorquage.

Selon un exemple de mise en œuvre, le procédé comprend une étape une étape f), selon laquelle on affiche les charges aux essieux 3, 4, 5.

A titre d'exemple de mise en œuvre, l'étape une étape f), consiste également à afficher des limites de charges applicables aux essieux 3, 4, 5.

Selon un exemple de mise en œuvre, le procédé comprend une étape de comparaison entre les valeurs de charge aux essieux 3, 4, 5 et des valeurs limites correspondantes, pour vérifier si les valeurs de charges aux essieux sont compatibles avec l'opération de remorquage.

Avantageusement, le procédé consiste à mesurer une pression de fluide hydraulique dans une grande chambre d'au moins un vérin de levage 9 et/ou au moins un vérin de correction d'assiette 11 du bras de remorquage 6.

Selon un autre exemple de mise en œuvre, le procédé consiste à mesurer une pression de fluide hydraulique dans une petite chambre d'au moins un vérin de levage 9 et/ou au moins un vérin de correction d'assiette 11 du bras de remorquage 6. Une mesure simultanée dans la petite et la grande chambre des vérins de levage 9b et de correction d'assiette peut également être envisagée.

Dans le cadre de la mise en œuvre de l'étape b) on détermine par exemple la distance entre le porte-outil 10 et l'axe de pivotement 6a du bras de remorquage 6 en utilisant également une mesure de l'assiette du bras télescopique 8 du bras de remorquage 6. La mesure de l'assiette du bras télescopique 8 permet ainsi de fournir avec une meilleure précision la valeur de la distance entre le porte-outil 10 et l'axe de pivotement 6a, laquelle est obtenue à l'aide d'une détermination indirecte, basée sur la mesure de l'extension dudit bras télescopique 8.

Il est évident que la présente description ne se limite pas aux exemples explicitement décrits, mais comprend également d'autres modes de réalisation. Ainsi, une caractéristique technique décrite, peut être remplacée par une caractéristique technique équivalente, sans sortir du cadre de la présente invention tel que défini par les revendications. En outre, une étape de mise en œuvre décrite, peut être remplacée par une étape de mise en œuvre équivalente, sans sortir du cadre de la présente invention tel que défini par les revendications.

## Revendications

1. Procédé d'aide au remorquage pour déterminer des paramètres de remorquage comprenant une charge verticale appliquée sur un véhicule remorqueur (1) comportant un châssis (2), au moins un essieu arrière (3), au moins un essieu avant (4, 5) à suspension mécanique et un bras de remorquage (6) articulé sur le châssis (2) l'aide d'un axe de pivotement (6a), ledit bras de remorquage (6) comportant un bras télescopique (8), ledit procédé comprenant les étapes :
- a) mesurer à l'aide d'au moins un capteur de pression, la pression de fluide hydraulique dans au moins une chambre d'au moins un vérin de levage (9) et/ou un vérin de correction d'assiette (11) du bras de remorquage (6), lequel comporte une masse suspendue au niveau d'un porte-outil (10) lors d'une opération de remorquage,
- b) déterminer la distance entre le porte-outil (10) et l'axe de pivotement (6a) du bras de remorquage (6) à partir d'une mesure de l'extension du bras télescopique (8),
- c) déterminer la valeur de l'effort vertical appliqué au porte-outil (10), et par conséquent au bras de remorquage (6), à partir des valeurs mesurées lors de l'étape a) et lors de l'étape b) et de coefficients correcteurs préenregistrés,
- e) selon laquelle on combine les valeurs déterminées sous c) avec le bilan de masse du véhicule remorqueur (1) pour estimer la charge à l'essieu arrière (3) et la charge à l'essieu avant (4, 5) lors de l'opération de remorquage.

2. Procédé d'aide au remorquage selon la revendication 1, **caractérisé en ce qu'**il comprend une étape d) selon laquelle on affiche l'effort vertical appliqué au porte-outil (10) déterminé sous c).

3. Procédé d'aide au remorquage selon la revendication 2, **caractérisé en ce que** l'étape d) consiste également à afficher une valeur limite d'effort vertical applicable au porte-outil (10).

4. Procédé d'aide au remorquage selon l'une quelconque des revendications 1 à 3, **caractérisé en ce qu'**il comprend une étape d'une part de comparaison entre la valeur de l'effort vertical appliqué au porte-outil (10) et une valeur limite correspondante pour vérifier si l'effort vertical appliqué au porte-outil (10) est compatible avec l'opération de remorquage et d'autre part d'affichage du résultat de cette comparaison.

5. Procédé d'aide au remorquage selon la revendication 1, **caractérisé en ce qu'**il comprend une étape une étape f), selon laquelle on affiche les charges aux essieux (3, 4, 5).

6. Procédé d'aide au remorquage selon la revendication 5, **caractérisé en ce qu'**il comprend une étape une étape f), consiste également à afficher des limites de charges applicables aux essieux (3, 4, 5).

7. Procédé d'aide au remorquage selon l'une quelconque des revendications 1 à 6, **caractérisé en ce qu'**il comprend une étape d'une part de comparaison entre les valeurs de charges aux essieux et des valeurs limites correspondantes, pour vérifier si les valeurs de charge aux essieux sont compatibles avec l'opération de remorquage, et d'autre part d'affichage du résultat de cette comparaison.

8. Procédé de mesure selon l'une quelconque des revendications 1 à 7, **caractérisé en ce qu'**il consiste à mesurer une pression de fluide hydraulique dans une grande chambre d'au moins un vérin de levage (9) et/ou au moins un vérin de correction d'assiette (11) du bras de remorquage (6).

9. Procédé de mesure selon l'une quelconque des revendications 1 à 8, **caractérisé en ce qu'**il consiste à mesurer une pression de fluide hydraulique dans une petite chambre d'au moins un vérin de levage (9) et/ou au moins un vérin de correction d'assiette (11) du bras de remorquage (6).

10. Procédé de mesure selon l'une quelconque des revendications 1 à 9, **caractérisé en ce que** à l'étape b) on détermine la distance entre le porte-outil (10) et l'axe de pivotement (6a) du bras de remorquage (6) en utilisant également une mesure de l'assiette du bras télescopique (8) du bras de remorquage (6).

11. Système d'aide au remorquage pour mettre en œuvre le procédé conforme à l'une quelconque des revendications 1 à 6, ledit système équipant un véhicule remorqueur (1) comportant un châssis (2), au moins un essieu arrière (3) et au moins un essieu avant (4, 5), à suspension mécanique, un bras de remorquage (6) comportant un bras télescopique (8) dont une extrémité est équipée d'un porte-outil (10) et dont une autre extrémité est articulée sur le châssis (2) via un axe de pivotement (6a) transversal au châssis (2), **caractérisé en ce qu'**il comprend :
- au moins un capteur de pression monté sur une chambre d'au moins un vérin de levage (9) et/ou d'au moins un vérin de correction d'assiette (11) du bras de remorquage (6),
- un dispositif de mesure pour mesurer ou déterminer la distance entre le porte-outil (10) et l'axe de pivotement (6a), et
- un calculateur ou automate comportant des valeurs théoriques préenregistrées comprenant des coefficients correcteurs pour déterminer avec les valeurs mesurées, la valeur estimée de l'effort vertical appliqué au porte-outil (10), les valeurs théoriques préenregistrées comprenant également le bilan de masse du véhicule remorqueur (1), de manière à fournir une estimation de la charge appliquée à l'essieu arrière (3) et une estimation de la charge appliquée à l'essieu avant (4, 5).

12. Système d'aide au remorquage selon la revendication 11, **caractérisé en ce qu'**il comprend un dispositif d'affichage du genre écran, associé au calculateur ou automate pour afficher au moins la valeur estimée de l'effort vertical au porte-outil (10).

13. Système d'aide au remorquage selon la revendication 12, **caractérisé en ce que** le dispositif d'affichage est conçu pour afficher simultanément la valeur estimée de l'effort vertical au porte-outil (10) et une valeur limite correspondante.

14. Système d'aide au remorquage selon la revendication 12 ou 13, **caractérisé en ce que** le dispositif d'affichage est conçu pour afficher la valeur estimée des charges appliquées aux essieux (3, 4, 5) et des valeurs limites correspondantes.

15. Système d'aide au remorquage selon l'une quelconque des revendications 11 à 14, **caractérisé en ce qu'**il comprend au moins un capteur de pression monté sur la grande chambre d'au moins un vérin de levage (9) et/ou d'au moins un vérin de correction d'assiette (11) du bras de remorquage (6).

16. Système d'aide au remorquage selon l'une quelconque des revendications 11 à 15, **caractérisé en ce qu'**il comprend au moins un capteur de pression complémentaire monté sur la petite chambre d'au moins un vérin de levage (9) et/ou d'au moins un vérin de correction d'assiette (11) du bras de remorquage (6).

17. Système d'aide au remorquage selon l'une quelconque des revendications 11 à 16, caractérisé qu'il comprend un indicateur visuel pour fournir une information visuelle image du niveau de charge verticale appliquée au bras de remorquage (6) en indiquant si les paramètres de remorquage sont situés dans une plage de fonctionnement permettant d'effectuer le remorquage en sécurité.

18. Système d'aide au remorquage selon la revendication 17, **caractérisé en ce que** l'indicateur visuel est une colonne lumineuse (13) montée sur le véhicule remorqueur.

19. Système d'aide au remorquage selon l'une quelconque des revendications 11 à 18, caractérisé qu'il comprend un indicateur sonore fournissant un signal sonore lorsque la charge verticale maximale admissible pour le bras de remorquage (6) est atteinte.

20. Système d'aide au remorquage selon l'une quelconque des revendications 11 à 19, caractérisé que le dispositif de mesure comprend un codeur à câble pour mesurer l'extension dudit bras télescopique (8) de manière à déterminer la distance entre ledit porte-outil (10) et l'axe de pivotement (6a) du bras de remorquage (6).

21. Système d'aide au remorquage selon la revendication 20, **caractérisé en ce que** le codeur à câble est monté dans le bras télescopique (8).

22. Système d'aide au remorquage selon l'une quelconque des revendications 11 ou 21, caractérisé que le vérin de correction d'assiette (11), articulé sur la partie coudée (7) via une première articulation (11a) et sur le bras télescopique (8) via une deuxième articulation (11b), est équipé d'un dispositif de mesure pour mesurer la distance entre sa première articulation (11a) et sa deuxième articulation (11b), pour fournir une information sur l'assiette du bras télescopique (8).

23. Véhicule remorqueur (1) comportant un châssis (2) comportant au moins un essieu arrière (3) et au moins un essieu avant (4, 5), à suspension mécanique, un bras de remorquage (6) présentant une partie coudée (7) dont une extrémité est articulée sur le châssis (2) via un axe de pivotement (6a) transversal au châssis (2) et dont une autre extrémité se prolonge par un bras télescopique (8) articulé, sur lequel est monté un porte-outil (10), des organes de commande hydrauliques du bras de remorquage (6) comprenant un vérin de levage (9) articulé sur la partie coudée (7) et sur le châssis (2), un vérin de correction d'assiette (11) articulé sur la partie coudée (7) et sur le bras télescopique (8), un vérin d'extension (12) monté dans ledit bras télescopique (8) et un circuit hydraulique pour alimenter en fluide hydraulique lesdits organes de commande, **caractérisé en ce qu'**il comporte un système d'aide au remorquage conforme à l'une quelconque des revendications 11 à 22.
